# EUROPEAN PATENT APPLICATION

(11) **EP 4 814 738 A1**
(43) Date of publication of application: **30.09.2026**
(21) Application number: 24899362.8
(22) Date of filing: 30.08.2024
(51) Int. Cl.: G06F 16/22

(54) **INDEX BLOAT SUPPRESSION METHOD AND APPARATUS, AND COMPUTING DEVICE CLUSTER**

(30) Priority: 08.12.2023 CN 202311690375
(71) Applicant: Huawei Technologies Co., Ltd., Shenzhen, Guangdong 518129 (CN)
(72) Inventor: DU, Yanrong, Shenzhen, Guangdong 518129 (CN)
(74) Representative: Goddar, Heinz J.
(86) International application number: PCT/CN2024/115745
(87) International publication number: WO 2025/118716

(57) **Abstract**

An index bloat suppression method is provided, and includes: determining that an index is bloated; identifying a recyclable page included in the index, and sequentially adding recyclable pages to a page recycle queue, where the recyclable page includes a sparse page or an empty page; and when the index requires a new page, sequentially reusing pages included in the page recycle queue. In this way, when the index is bloated, the recyclable pages in the index are sequentially added to the page recycle queue, and the pages in the page recycle queue are sequentially reused, thereby suppressing index bloat.

## Description

This application claims priority to Chinese Patent Application No. 202311690375.0, filed with the China National Intellectual Property Administration on December 8, 2023 and entitled "INDEX BLOAT SUPPRESSION METHOD AND APPARATUS, AND COMPUTE DEVICE CLUSTER", which is incorporated herein by reference in its entirety.

### TECHNICAL FIELD

This application relates to the field of information technology (information technology, IT), and in particular, to an index bloat suppression method and apparatus, and a compute device cluster.

### BACKGROUND

Indexes are key components used to accelerate database query operations. However, indexes may suffer from bloat over time, resulting in performance degradation and a waste of storage resources. For example, when index skew occurs in services, indexes are written and deleted in an out-of-order manner, or indexes are marked as "delete" but space is not recycled and reused in time after deletion, storage space occupied by the indexes is far greater than space required for stored data. As a result, a large amount of storage space of a database is wasted, and index bloat occurs. To maintain stability of the database, index bloat usually needs to be suppressed. However, it is often difficult to detect index bloat in time, resulting in continuous index bloat.

### SUMMARY

This application provides an index bloat suppression method and apparatus, a compute device cluster, a computer storage medium, and a computer product, to effectively suppress index bloat.

According to a first aspect, this application provides an index bloat suppression method, including: determining that an index is bloated; identifying a recyclable page included in the index, and sequentially adding recyclable pages to a page recycle queue, where the recyclable page includes a sparse page or an empty page; and when the index requires a new page, sequentially reusing pages included in the page recycle queue. In this way, when the index is bloated, the recyclable pages in the index are sequentially added to the page recycle queue, and the pages in the page recycle queue are sequentially reused, thereby suppressing index bloat.

In some embodiments, determining that the index is bloated includes: obtaining a first size of a key (key) inserted into the index by performing an insertion operation, a second size of a key deleted from the index by performing a deletion operation, and a third size of an extended page generated by splitting the index; and determining that the index is bloated based on the first size, the second size, the third size, and a bloat size included in statistics information in a database. In this way, the statistics information is no longer used as the only source of bloat information perception. Instead, a bloat perception capability is added in index insertion and deletion processes. Index bloat perception comes from integration of three parts: insertion, deletion, and the statistics information. This ensures real-time perception, and resolves a problem of delayed bloat perception of the statistics information.

In some embodiments, determining that the index is bloated based on the first size, the second size, the third size, and the bloat size included in the statistics information in the database includes: determining a size of bloat space of the index based on the first size, the second size, the third size, and the bloat size; determining a bloat ratio of the index based on the size of the bloat space of the index, a total quantity of pages of the index, and a size of each page of the index; and when the size of the bloat space of the index is greater than a preset space size, and the bloat ratio of the index is greater than a preset proportion threshold, determining that the index is bloated. In this way, whether the index is bloated is determined based on the size of the bloat space and the bloat ratio of the index.

In some embodiments, the method further includes: persistently storing the size of the bloat space of the index. In this way, bloat information can be prevented from being lost in a case such as abnormal restart, thereby avoiding inaccurate bloat perception.

In some embodiments, adding any recyclable page to the page recycle queue includes: when a commit/modification timestamp of a latest transaction on the any recyclable page is greater than a maximum commit/modification timestamp in metadata of the index, updating the maximum commit/modification timestamp to the commit/modification timestamp of the latest transaction; adding a recycle timestamp to the any recyclable page, and updating a reuse timestamp in the metadata to the recycle timestamp; and adding the any recyclable page to the page recycle queue. In this way, the page in the index is recycled by using two timestamps in the metadata.

In some embodiments, reusing any page included in the page recycle queue includes: reusing the any page, and updating the reuse timestamp in the metadata to a recycle timestamp of the any page. In this way, the page is reused.

In some embodiments, the method further includes: when time for accessing/modifying the index is greater than or equal to the maximum commit timestamp, and time for accessing/modifying a page in the index is greater than or equal to recycle time, allowing access/modification to the index. In this way, it is ensured that index bloat suppression and concurrent service access, and index modification do not interfere with or block each other.

According to a second aspect, this application provides an index bloat suppression apparatus, including: a determining module, configured to determine that an index is bloated; a recycling module, configured to: identify a recyclable page included in the index, and sequentially add recyclable pages to a page recycle queue, where the recyclable page includes a sparse page or an empty page; and a reusing module, configured to: when the index requires a new page, sequentially reuse pages included in the page recycle queue.

In some embodiments, when determining that the index is bloated, the determining module is specifically configured to: obtain a first size of a key (key) inserted into the index by performing an insertion operation, a second size of a key deleted from the index by performing a deletion operation, and a third size of an extended page generated by splitting the index; and determine that the index is bloated based on the first size, the second size, the third size, and a bloat size included in statistics information in a database.

In some embodiments, when determining that the index is bloated based on the first size, the second size, the third size, and the bloat size included in the statistics information in the database, the determining module is specifically configured to: determine a size of bloat space of the index based on the first size, the second size, the third size, and the bloat size; determine a bloat ratio of the index based on the size of the bloat space of the index, a total quantity of pages of the index, and a size of each page of the index; and when the size of the bloat space of the index is greater than a preset space size, and the bloat ratio of the index is greater than a preset proportion threshold, determine that the index is bloated.

In some embodiments, the determining module is further configured to persistent the size of the bloat space of the index.

In some embodiments, when adding any recyclable page to the page recycle queue, the recycling module is specifically configured to: when a commit/modification timestamp of a latest transaction on the any recyclable page is greater than a maximum commit/modification timestamp in metadata of the index, update the maximum commit/modification timestamp to the commit/modification timestamp of the latest transaction; add a recycle timestamp to the any recyclable page, and update a reuse timestamp in the metadata to the recycle timestamp; and add the any recyclable page to the page recycle queue.

In some embodiments, when reusing any page included in the page recycle queue, the reusing module is specifically configured to: reuse the any page, and update the reuse timestamp in the metadata to a recycle timestamp of the any page.

In some embodiments, the reusing module is further configured to: when time for accessing/modifying the index is greater than or equal to the maximum commit timestamp, and time for accessing/modifying a page in the index is greater than or equal to the recycle time, allow access/modification to the index.

According to a third aspect, this application provides a compute device cluster, including at least one compute device. Each compute device includes a processor and a memory, and the processor of the at least one compute device is configured to execute instructions stored in a memory of the at least one compute device, to enable the compute device cluster to perform the method described in the first aspect or any one of the possible implementations of the first aspect.

According to a fourth aspect, this application provides a computer-readable storage medium, including computer program instructions. When the computer program instructions are executed by a compute device cluster, the compute device cluster performs the method described in the first aspect or any one of the possible implementations of the first aspect. The compute device cluster may include one or more compute devices.

According to a fifth aspect, this application provides a computer program product including instructions. When the instructions are run by a compute device cluster, the compute device cluster is enabled to perform the method described in the first aspect or any one of the possible implementations of the first aspect. The compute device cluster may include one or more compute devices.

It should be understood that, for beneficial effect of the second aspect to the fifth aspect, refer to related descriptions in the first aspect. Details are not described herein again.

### BRIEF DESCRIPTION OF DRAWINGS

FIG. 1 is a diagram of a logical architecture of a database management system according to an embodiment of this application;
FIG. 2 is a schematic flowchart of an index bloat suppression method according to an embodiment of this application;

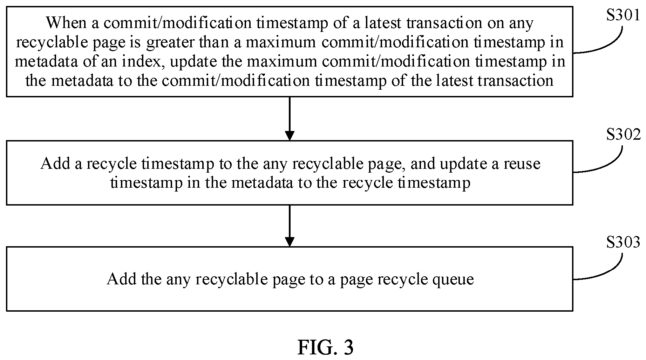

FIG. 3 is a diagram of steps of adding a recyclable page to a page recycle queue according to an embodiment of this application;
FIG. 4A, FIG. 4B, FIG. 4C, FIG. 4D, FIG. 4E, FIG. 4F, and FIG. 4G are diagrams of page recycling and reusing processes according to an embodiment of this application;
FIG. 5 is a diagram of a structure of an index bloat suppression apparatus according to an embodiment of this application;
FIG. 6 is a diagram of a structure of a compute device according to an embodiment of this application;
FIG. 7 is a diagram of a structure of a compute device cluster according to an embodiment of this application; and
FIG. 8 is a diagram of a structure of another compute device cluster according to an embodiment of this application.

### DESCRIPTION OF EMBODIMENTS

The term "and/or" in this specification describes an association relationship between associated objects and represents that three relationships may exist. For example, A and/or B may represent the following three cases: Only A exists, both A and B exist, and only B exists. The character "/" in this specification indicates an "or" relationship between the associated objects. For example, A/B indicates A or B.

In the specification and claims of this application, the terms "first", "second", and the like are intended to distinguish between different objects, but do not indicate a particular order of the objects. For example, a first response message, a second response message, and the like are used to distinguish between different response messages, but do not indicate a particular order of the response messages.

In addition, in embodiments of this application, the word "exemplary" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

In descriptions of embodiments of this application, unless otherwise specified, "a plurality of" means two or more. For example, a plurality of processing units are two or more processing units, and a plurality of elements are two or more elements.

First, related technical terms used in embodiments of this application are described.

### (1) Index bloat

Index bloat refers to a phenomenon that a structure of an index gradually increases over time. As a result, storage space occupied by the index is larger than a size of actually stored data. Index bloat usually occurs when data deletion and update operations are frequently performed, but index maintenance operations (such as index rebuild and fragment clearance) are not performed in a timely manner. Consequently, the structure of the index is no longer compact, and a large amount of invalid or redundant data is not cleared.

### (2) Bloat suppression

Bloat suppression refers to a process of taking measures or performing operations (for example, recycling and reusing idle space of an index) to limit or slow down a bloat process of a structure of the index, so that storage space occupied by the index is close to space required by data actually stored in the index.

The following describes the technical solutions provided in embodiments of this application.

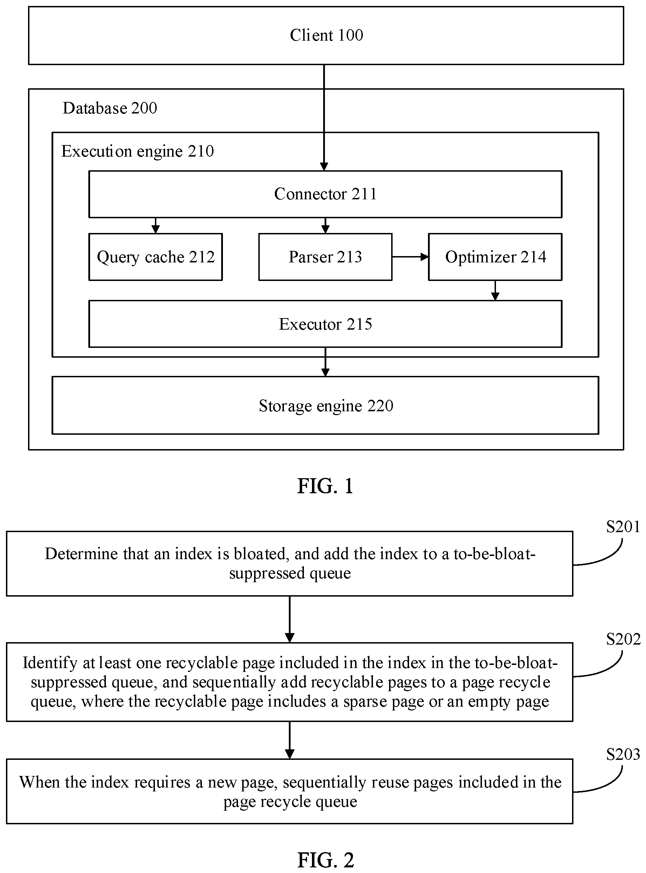

For example, FIG. 1 is a diagram of a logical architecture of a database management system according to an embodiment of this application. As shown in FIG. 1, the database management system may include a client 100 and a database 200. The database 200 may include an execution engine 210 and a storage engine 220. The client 100 refers to various forms of connections to the database, such as an activeX data object (activeX data object, ADO) connection used in .NET and a Java database connect (Java database connect, JDBC) connection used in Java.

The execution engine 210 is mainly responsible for generating, in a current load scenario, an efficient execution plan for a structured query language (structured query language, SQL) statement input by the client 110, and running the execution plan. In addition, when accessing and modifying an index in the storage engine 220, the execution engine 210 may also collect statistics on index bloat, and/or persist the collected statistics on index bloat to the storage engine 220. The execution engine 210 may include a connector 211, a query cache 212, a parser 213, an optimizer 214, and an executor 215. The connector 211 is mainly responsible for communication with the client 110, and is responsible for service logic processing such as connection authentication, connection quantity determining, and connection pool processing. The query cache 212 is mainly used to improve query efficiency. The cache is stored in a form of a hash table of a key and a value. The key is a specific SQL statement, and the value is a set of results. When an SQL statement arrives, if a query cache function is enabled, the execution engine 210 may first check the query cache 212 for matched data. If the matched data is found, the execution engine 210 directly returns the matched data to the client 110, and does not need to parse the corresponding SQL statement. However, if the SQL statement includes a user-defined function, a storage function, a user variable, or a temporary table, the SQL statement is not processed by using the query cache 212. If no match is found in the query cache 212, the parser 213 is used to parse the corresponding SQL statement. The parser 213 is mainly responsible for parsing the SQL statement according to a syntax rule and the like, and generating a parse tree that can be identified internally. The optimizer 214 is responsible for optimizing the parse tree generated by the parser 213, to find an optimal execution plan. The executor 215 is mainly responsible for: after the optimizer 214 finds the optimal execution plan, invoking an interface of the storage engine 220 based on the optimal execution plan to perform a query or another operation, and finally returning a query result set to the client 110.

The storage engine 220 is mainly responsible for data storage, retrieval, and management, and defines important features such as how the database management system organizes data, and executes a query and a transaction, and data security and reliability. In addition, the storage engine 220 may also be responsible for storing an index or a size of bloat space of the index.

For example, FIG. 2 is a schematic flowchart of an index bloat suppression method according to an embodiment of this application. It may be understood that the method may be performed by any apparatus, device, platform, or device cluster having computing and processing capabilities. As shown in FIG. 2, the index bloat suppression method may include the following steps:

S201: Determine that an index is bloated, and add the index to a to-be-bloat-suppressed queue.

In this embodiment, whether the index is bloated may be determined based on statistics information that is in a database and that is associated with the index. The statistics information includes a bloat size of the index obtained through statistics collection. When the bloat size of the index in the statistics information is greater than a preset size threshold, it may be determined that the index is bloated. In addition, to improve determining accuracy, a bloat ratio of the index may be further introduced during determining. When the bloat size of the index is greater than the preset size threshold, and the bloat ratio of the index exceeds a preset bloat ratio threshold, it may be determined that the index is bloated. The bloat ratio of the index may be determined based on the bloat size of the index, a total quantity of pages of the index, and a size of each page of the index. Specifically, the bloat ratio of the index is *expand_ration = expand_size* ÷ (*real_total_pages* × *page_size*) , where *expand_size* is the bloat size of the index, *real_total_pages* is the total quantity of pages of the index, and *page_size* is the size of each page of the index. After it is determined that the index is bloated, the index may be added to the to-be-bloat-suppressed queue. For example, the to-be-bloat-suppressed queue may include an identifier of each bloated index. For example, the index may be but is not limited to a Btree/B+tree.

In a possible implementation, to implement real-time perception of index bloat, a first size of a key (key) inserted into the index by performing an insertion operation may be obtained, a second size of a key deleted from the index by performing a deletion operation may be obtained, and a third size of an extended page generated by splitting the index may be obtained. Then, whether the index is bloated is determined based on the first size, the second size, the third size, and the bloat size of the index in the statistics information. a bloat size may be first determined based on the first size, the second size, and the third size. For example, the bloat size is *expanded_size + deleted_size - insert_size* , where *expanded_size* is the third size, *deleted_size* is the second size, and *insert_size* is the first size. Then, the bloat size is compared with the bloat size in the statistics information, and the largest bloat size is selected as a size of bloat space of the index. When the size of the bloat space is greater than a preset size threshold, it is determined that the index is bloated. In addition, the bloat ratio of the index may also be introduced during determining. In this case, the bloat ratio of the index is determined based on the size of the bloat space of the index, the total quantity of pages of the index, and the size of each page of the index.

Further, after the size of the bloat space of the index is determined, the size of the bloat space may be persisted, to prevent bloat information from being lost in a case such as abnormal restart and causing inaccurate bloat perception.

S202: Identify at least one recyclable page included in the index in the to-be-bloat-suppressed queue, and sequentially add recyclable pages to a page recycle queue, where the recyclable page includes a sparse page or an empty page.

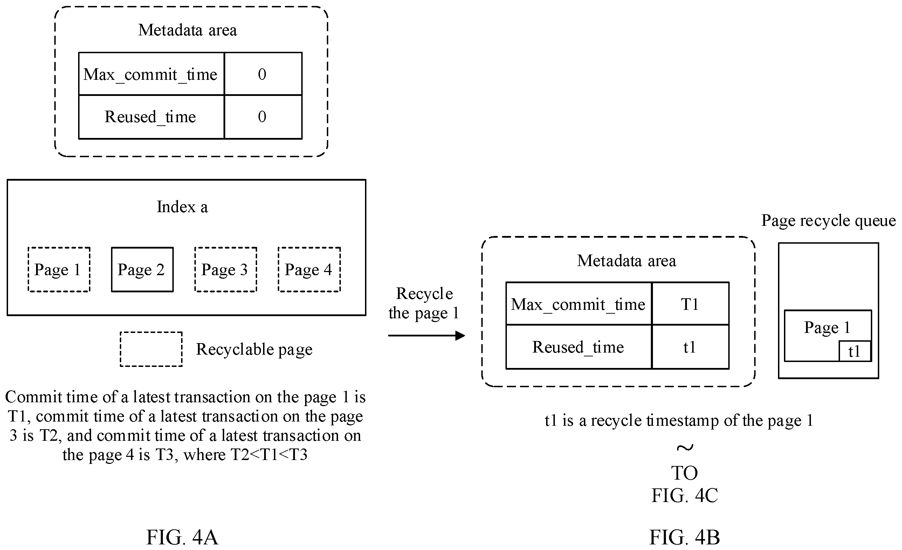

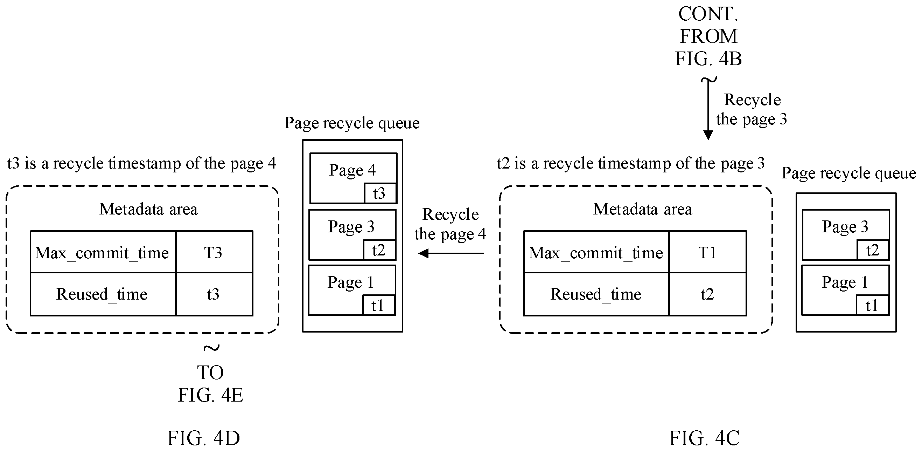

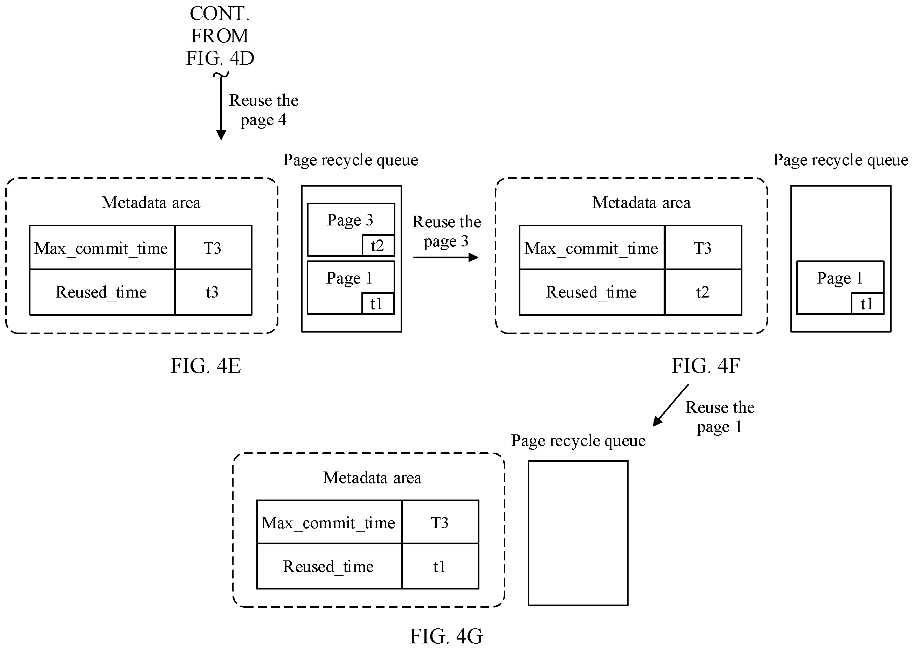

In this embodiment, the recyclable pages included in the index in the to-be-bloat-suppressed queue may be identified sequentially. During identification, all pages in the index may be traversed. After the recyclable pages are identified, the identified recyclable pages in the index may be sequentially added to the page recycle queue. The recyclable page includes the sparse page or the empty page. The sparse page is a page on which space occupied by data is less than a preset space threshold. In some embodiments, adding any recyclable page to the page recycle queue may include the following steps: S301: When a commit/modification timestamp of a latest transaction on the any recyclable page is greater than a maximum commit/modification timestamp in metadata of the index, update the maximum commit/modification timestamp in the metadata to the commit/modification timestamp of the latest transaction. S302: Add a recycle timestamp to the any recyclable page, and update a reuse timestamp in the metadata to the recycle timestamp. S303: Add the any recyclable page to the page recycle queue. For ease of understanding, the following uses examples for description. Refer to FIG. 4A, FIG. 4B, FIG. 4C, FIG. 4D, FIG. 4E, FIG. 4F, and FIG. 4G. As shown in FIG. 4A, an index a is bloated, and recyclable pages in the index a are a page 1, a page 3, and a page 4. Commit time of a latest transaction on the page 1 is T1, commit time of a latest transaction on the page 3 is T2, and commit time of a latest transaction on the page 4 is T3, where T2<T1<T3. In addition, in FIG. 4A, a maximum commit timestamp (Max_commit_time) of a metadata area of the index a is an initial value, and a reuse timestamp (Reused_time) is also an initial value. When the recyclable pages in the index a are traversed, the page 1 is first identified. In this case, the page may be recycled. During recycling, as shown in FIG. 4B, Max_commit_time in the metadata area of the index a is updated to T1, Reused_time is updated to a recycle timestamp t1 of the page 1, t1 is added to the page 1, and the page 1 is added to a page recycle queue. In this way, the page 1 is recycled. When a page 2 is traversed, it is identified that the page is not a recyclable page, and then the page 3 is identified. The page 3 is identified as a recyclable page, and the page 3 is recycled. During recycling, as shown in FIG. 4C, because T2<T1, Max_commit_time in the metadata area may remain unchanged, Reused_time may be updated to a recycle timestamp t2 of the page 3, t2 is added to the page 3, and the page 3 is added to the page recycle queue. In this way, the page 3 is recycled. When the page 4 is traversed, it is identified that the page is a recyclable page, and the page 4 is recycled. During recycling, as shown in FIG. 4D, because T1<T3, T1 of Max_commit_time in the metadata area is updated to T3, Reused_time is updated to a recycle timestamp t3 of the page 4, t3 is added to the page 4, and the page 4 is added to the page recycle queue. In this way, the page 4 is recycled. In some embodiments, when time for accessing/modifying the index is greater than or equal to the maximum commit timestamp, and time for accessing/modifying a page in the index is greater than or equal to recycle time, access/modification to the index is allowed. This ensures that index bloat suppression and concurrent service access, and index modification do not interfere with and block each other.

S203: When the index requires a new page, sequentially reuse pages included in the page recycle queue.

In this embodiment, when the index requires a new page, the pages included in the page recycle queue may be sequentially reused, so that there is no need to wait for a long transaction or a long query to end, and bloat caused by applying for new space can be avoided. For example, when any page included in the page recycle queue is reused, after the page is reused, the reuse timestamp in the metadata may be updated to a recycle timestamp of the reused page. Still refer to FIG. 4A, FIG. 4B, FIG. 4C, FIG. 4D, FIG. 4E, FIG. 4F, and FIG. 4G. For example, as shown in FIG. 4E, when the page 4 is reused, because Reused_time in the metadata area is the recycle timestamp t3 of the page 4, Reused_time may not need to be updated. As shown in FIG. 4F, when the page 3 is reused, t3 in Reused_time in the metadata area may be updated to the recycle timestamp t2 of the page 3. As shown in FIG. 4G, when the page 1 is reused, t2 in Reused_time in the metadata area may be updated to the recycle timestamp t1 of the page 1.

In this way, when the index is bloated, the recyclable pages in the index are sequentially added to the page recycle queue, and the pages in the page recycle queue are sequentially reused, thereby suppressing index bloat.

It may be understood that, in FIG. 2, each time it is determined that an index is bloated, recyclable pages in the index may be identified, or the bloated index may be first added to the to-be-bloat-suppressed queue, and then the recyclable pages in the index in the to-be-bloat-suppressed queue are sequentially identified. This may be specifically determined based on an actual situation, and is not limited herein. In addition, different steps in FIG. 2 may be performed by using but are not limited to different threads, thereby improving efficiency of index bloat perception and suppression.

It can be understood that sequence numbers of the steps in the foregoing embodiments do not mean an execution sequence. An execution sequence of processes should be determined based on functions and internal logic of the processes, and should not be construed as any limitation on implementation processes of embodiments of this application. In addition, the foregoing described embodiments may be combined based on an actual case, and a combined solution still falls within the protection scope of this application.

Based on the method in the foregoing embodiments, embodiments of this application provide an index bloat suppression apparatus.

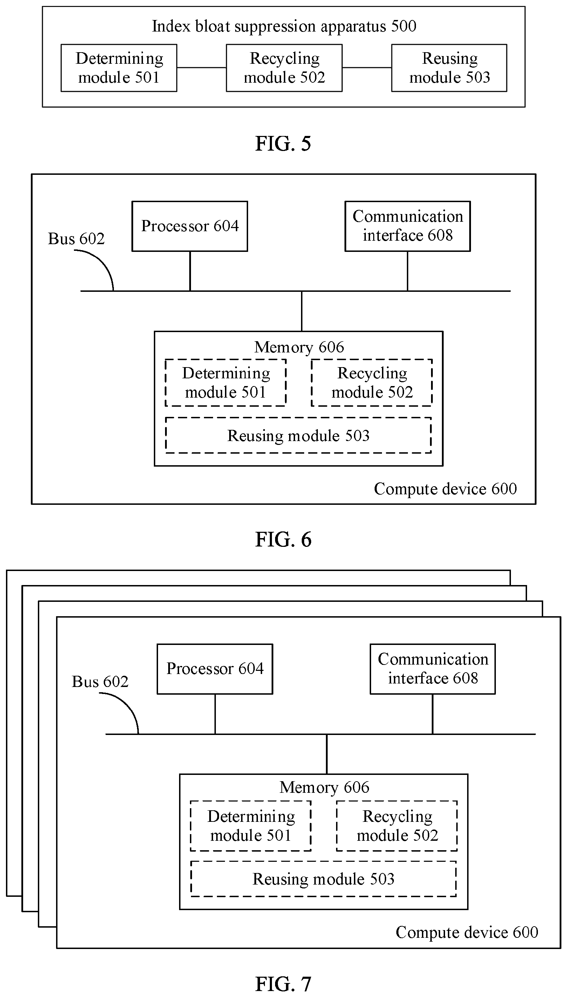

For example, FIG. 5 is a diagram of a structure of an index bloat suppression apparatus according to an embodiment of this application. As shown in FIG. 5, an index bloat suppression apparatus 500 includes a determining module 501, a recycling module 502, and a reusing module 503. The determining module 501 is configured to determine that an index is bloated. The recycling module 502 is configured to: identify a recyclable page included in the index, and sequentially add recyclable pages to a page recycle queue, where the recyclable page includes a sparse page or an empty page. The reusing module 503 is configured to: when the index requires a new page, sequentially reuse pages included in the page recycle queue.

In some embodiments, when determining that the index is bloated, the determining module 501 is specifically configured to: obtain a first size of a key (key) inserted into the index by performing an insertion operation, a second size of a key deleted from the index by performing a deletion operation, and a third size of an extended page generated by splitting the index; and determine that the index is bloated based on the first size, the second size, the third size, and a bloat size included in statistics information in a database.

In some embodiments, when determining that the index is bloated based on the first size, the second size, the third size, and the bloat size included in the statistics information in the database, the determining module 501 is specifically configured to: determine a size of bloat space of the index based on the first size, the second size, the third size, and the bloat size; determine a bloat ratio of the index based on the size of the bloat space of the index, a total quantity of pages of the index, and a size of each page of the index; and when the size of the bloat space of the index is greater than a preset space size, and the bloat ratio of the index is greater than a preset proportion threshold, determine that the index is bloated.

In some embodiments, the determining module 501 is further configured to persist the size of the bloat space of the index.

In some embodiments, when adding any recyclable page to the page recycle queue, the recycling module 502 is specifically configured to: when a commit/modification timestamp of a latest transaction on the any recyclable page is greater than a maximum commit/modification timestamp in metadata of the index, update the maximum commit/modification timestamp to the commit/modification timestamp of the latest transaction; add a recycle timestamp to the any recyclable page, and update a reuse timestamp in the metadata to the recycle timestamp; and add the any recyclable page to the page recycle queue.

In some embodiments, when reusing any page included in the page recycle queue, the reusing module 503 is specifically configured to: reuse the any page, and update the reuse timestamp in the metadata to a recycle timestamp of the any page.

In some embodiments, the reusing module 503 is further configured to: when time for accessing/modifying the index is greater than or equal to the maximum commit timestamp, and time for accessing/modifying a page in the index is greater than or equal to the recycle time, allow access/modification to the index.

In some embodiments, the determining module 501, the recycling module 502, and the reusing module 503 shown in FIG. 5 may be implemented by using software or hardware. For example, the following describes an implementation of the determining module 501 by using the determining module 501 as an example. Similarly, for implementations of the recycling module 502 and the reusing module 503, refer to the implementation of the determining module 501.

The module is used as an example of a software functional unit, and the determining module 501 may include code run on a compute instance. The compute instance may include at least one of a physical host (compute device), a virtual machine, and a container. Further, there may be one or more compute instances. For example, the determining module 501 may include code that is run on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed on a same virtual private cloud (virtual private cloud, VPC), or may be distributed on a plurality of VPCs. Usually, one VPC is set in one region. A communication gateway needs to be set in each VPC for communication between two VPCs in a same region or between VPCs in different regions. Interconnection between the VPCs is implemented through the communication gateway.

The module is used as an example of a hardware functional unit, and the determining module 501 may include at least one compute device, for example, a server. Alternatively, the determining module 501 may be a device implemented by using an application-specific integrated circuit (application-specific integrated circuit, ASIC) or a programmable logic device (programmable logic device, PLD). The PLD may be implemented by a complex programmable logic device (complex programmable logical device, CPLD), a field-programmable gate array (field-programmable gate array, FPGA), generic array logic (generic array logic, GAL), or any combination thereof.

A plurality of compute devices included in the determining module 501 may be distributed in a same region, or may be distributed in different regions. The plurality of compute devices included in the determining module 501 may be distributed in a same AZ, or may be distributed in different AZs. Similarly, the plurality of compute devices included in the determining module 501 may be distributed on a same VPC, or may be distributed on a plurality of VPCs. The plurality of compute devices may be any combination of compute devices such as a server, an ASIC, a PLD, a CPLD, an FPGA, and GAL.

It should be noted that, in another embodiment, the determining module 501 may be configured to perform any step in the index bloat suppression method described in the foregoing embodiments, the recycling module 502 may also be configured to perform any step in the index bloat suppression method described in the foregoing embodiments, and the reusing module 503 may also be configured to perform any step in the index bloat suppression method described in the foregoing embodiments. The steps that are implemented by the determining module 501, the recycling module 502, and the reusing module 503 may be specified as required. The determining module 501, the recycling module 502, and the reusing module 503 respectively implement different steps in the index bloat suppression method described in the foregoing embodiments, to implement all functions of the index bloat suppression apparatus 500 shown in FIG. 5.

This application further provides a compute device 600. As shown in FIG. 6, the compute device 600 includes a bus 602, a processor 604, a memory 606, and a communication interface 608. The processor 604, the memory 606, and the communication interface 608 communicate with each other through the bus 602. The compute device 600 may be a server or a terminal device. It should be understood that quantities of processors and memories in the compute device 600 are not limited in this application.

The bus 602 may be a peripheral component interconnect (peripheral component interconnect, PCI) bus, an extended industry standard architecture (extended industry standard architecture, EISA) bus, or the like. Buses may be classified into address buses, data buses, control buses, and the like. For ease of representation, the bus is represented by using only one line in FIG. 6. However, it does not mean that there is only one bus or only one type of bus. The bus 604 may include a path for transmitting information between components (for example, the memory 606, the processor 604, and the communication interface 608) of the compute device 600.

The processor 604 may be any one or more of processors such as a central processing unit (central processing unit, CPU), a graphics processing unit (graphics processing unit, GPU), a microprocessor (microprocessor, MP), or a digital signal processor (digital signal processor, DSP).

The memory 606 may include a volatile memory (volatile memory), for example, a random access memory (random access memory, RAM). The processor 1004 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 606 stores executable program code, and the processor 604 executes the executable program code to separately implement functions of the determining module 501, the recycling module 502, and the reusing module 503 shown in FIG. 5, to implement the index bloat suppression method described in the foregoing embodiments. That is, the memory 606 stores instructions used to perform the index bloat suppression method described in the foregoing embodiments.

Alternatively, the memory 606 stores executable code, and the processor 604 executes the executable code to separately implement functions of the index bloat suppression apparatus 500 shown in FIG. 5, to implement the index bloat suppression method described in the foregoing embodiments. That is, the memory 606 stores instructions used to perform the index bloat suppression method described in the foregoing embodiments.

The communication interface 603 uses a transceiver module, for example, but not limited to a network interface card, a transceiver, to implement communication between the compute device 600 and another device or a communication network.

Embodiments of this application further provide a compute device cluster. The compute device cluster includes at least one compute device. The compute device may be a server, for example, a central server, an edge server, or a local server in a local data center. In some embodiments, the compute device may alternatively be a terminal device, for example, a desktop computer, a notebook computer, or a smartphone.

As shown in FIG. 7, the compute device cluster includes at least one compute device 600. The memory 606 in each of one or more compute devices 600 in the compute device cluster may store the same instructions for performing the index bloat suppression method described in the foregoing embodiments.

In some possible implementations, the memory 606 in each of the one or more compute devices 600 in the compute device cluster may also store some instructions used to perform the index bloat suppression method described in the foregoing embodiments. In other words, a combination of the one or more compute devices 600 may jointly execute the instructions for performing the index bloat suppression method described in the foregoing embodiments.

It should be noted that memories 606 in different compute devices 600 in the compute device cluster may store different instructions, and the different instructions are respectively used to perform some functions of the index bloat suppression apparatus 500 shown in FIG. 5. In other words, the instructions stored in the memories 606 in different compute devices 600 may implement functions of one or more of the determining module 501, the recycling module 502, and the reusing module 503.

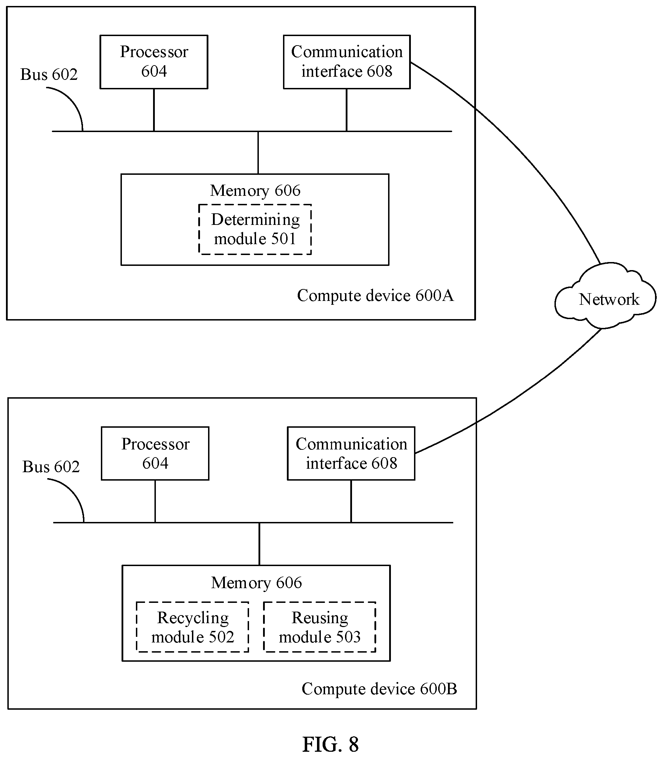

In some possible implementations, the one or more compute devices in the compute device cluster may be connected through a network. The network may be a wide area network, a local area network, or the like. FIG. 8 shows a possible implementation. As shown in FIG. 8, two compute devices 600A and 600B are connected through a network. Specifically, each compute device is connected to the network through a communication interface in the compute device. In this possible implementation, a memory 606 in the compute device 600A stores instructions for performing functions of the determining module 501. In addition, a memory 606 in the compute device 600B stores instructions for performing functions of the recycling module 502 and the reusing module 503.

It should be understood that functions of the compute device 600A shown in FIG. 8 may alternatively be completed by a plurality of compute devices 600. Similarly, functions of the compute device 600B may alternatively be completed by a plurality of compute devices 600.

Embodiments of this application further provide another compute device cluster. For a connection relationship between compute devices in the compute device cluster, refer to the similar connection manners of the compute device clusters in FIG. 7 and FIG. 8. A difference lies in that memories 606 in one or more compute devices 600 in the compute device cluster may store same instructions used to perform the method in the foregoing embodiments.

In some possible implementations, a memory 606 of each of the one or more compute devices 600 in the compute device cluster may also store some instructions used to perform the foregoing index bloat suppression method. In other words, a combination of the one or more compute devices 600 may jointly execute instructions for performing the foregoing index bloat suppression method.

Based on the method in the foregoing embodiment, embodiments of this application provide a computer-readable storage medium. The computer-readable storage medium stores a computer program. When the computer program runs on a compute device cluster including at least one compute device, the compute device cluster is enabled to perform the method described in the foregoing embodiments. For example, the computer-readable storage medium may be any usable medium that can be stored on a compute device, or a data storage device, for example, a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like.

Based on the method in the foregoing embodiments, embodiments of this application provide a computer program product including instructions. When the computer program product runs on a compute device cluster including at least one compute device, the compute device cluster is enabled to perform the method in the foregoing embodiments.

It can be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

The method steps in embodiments of this application may be implemented in a hardware manner, or may be implemented by the processor by executing software instructions. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to the processor, so that the processor can read information from the storage medium and write information into the storage medium. Certainly, the storage medium may be a component of the processor. The processor and the storage medium may be disposed in an ASIC.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, procedures or functions according to embodiments of this application are all or partially generated. The computer may be a general-purpose computer, a dedicated computer, a computer network, or another programmable apparatus. The computer instructions may be stored in a computer-readable storage medium, or may be transmitted through the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like.

It may be understood that various numbers in embodiments of this application are merely used for differentiation for ease of description, and are not used to limit the scope of embodiments of this application.

Finally, it should be noted that the foregoing embodiments are merely intended to describe the technical solutions of this application, but not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions in embodiments of this application.

## Claims

1. An index bloat suppression method, comprising:
determining that an index is bloated;
identifying a recyclable page comprised in the index, and sequentially adding recyclable pages to a page recycle queue, wherein the recyclable page comprises a sparse page or an empty page; and
when the index requires a new page, sequentially reusing pages comprised in the page recycle queue.

2. The method according to claim 1, wherein determining that the index is bloated comprises:
obtaining a first size of a key (key) inserted into the index by performing an insertion operation, a second size of a key deleted from the index by performing a deletion operation, and a third size of an extended page generated by splitting the index; and
determining that the index is bloated based on the first size, the second size, the third size, and a bloat size comprised in statistics information in a database.

3. The method according to claim 2, wherein determining that the index is bloated based on the first size, the second size, the third size, and the bloat size comprised in the statistics information in the database comprises:
determining a size of bloat space of the index based on the first size, the second size, the third size, and the bloat size;
determining a bloat ratio of the index based on the size of the bloat space of the index, a total quantity of pages of the index, and a size of each page of the index; and
when the bloat space of the index is greater than a preset space size, and the bloat ratio of the index is greater than a preset proportion threshold, determining that the index is bloated.

4. The method according to claim 3, further comprising:
persisting the size of the bloat space of the index.

5. The method according to any one of claims 1 to 4, wherein adding any recyclable page to the page recycle queue comprises:
when a commit/modification timestamp of a latest transaction on the any recyclable page is greater than a maximum commit/modification timestamp in metadata of the index, updating the maximum commit/modification timestamp to the commit/modification timestamp of the latest transaction;
adding a recycle timestamp to the any recyclable page, and updating a reuse timestamp in the metadata to the recycle timestamp; and
adding the any recyclable page to the page recycle queue.

6. The method according to claim 5, wherein reusing any page comprised in the page recycle queue comprises:
reusing the any page, and updating the reuse timestamp in the metadata to a recycle timestamp of the any page.

7. The method according to claim 5 or 6, further comprising:
when time for accessing/modifying the index is greater than or equal to the maximum commit timestamp, and time for accessing/modifying a page in the index is greater than or equal to the recycle time, allowing access/modification to the index.

8. An index bloat suppression apparatus, comprising:
a determining module, configured to determine that an index is bloated;
a recycling module, configured to: identify a recyclable page comprised in the index, and sequentially add recyclable pages to a page recycle queue, wherein the recyclable page comprises a sparse page or an empty page; and
a reusing module, configured to: when the index requires a new page, sequentially reuse pages comprised in the page recycle queue.

9. The apparatus according to claim 8, wherein when determining that the index is bloated, the determining module is specifically configured to:
obtain a first size of a key (key) inserted into the index by performing an insertion operation, a second size of a key deleted from the index by performing a deletion operation, and a third size of an extended page generated by splitting the index; and
determine that the index is bloated based on the first size, the second size, the third size, and a bloat size comprised in statistics information in a database.

10. The apparatus according to claim 9, wherein when determining that the index is bloated based on the first size, the second size, the third size, and the bloat size comprised in the statistics information in the database, the determining module is specifically configured to:
determine a size of bloat space of the index based on the first size, the second size, the third size, and the bloat size;
determine a bloat ratio of the index based on the size of the bloat space of the index, a total quantity of pages of the index, and a size of each page of the index; and
when the bloat space of the index is greater than a preset space size, and the bloat ratio of the index is greater than a preset proportion threshold, determine that the index is bloated.

11. The apparatus according to claim 10, wherein the determining module is further configured to:
persist the size of the bloat space of the index.

12. The apparatus according to any one of claims 8 to 11, wherein when adding any recyclable page to the page recycle queue, the recycling module is specifically configured to:
when a commit/modification timestamp of a latest transaction on the any recyclable page is greater than a maximum commit/modification timestamp in metadata of the index, update the maximum commit/modification timestamp to the commit/modification timestamp of the latest transaction;
add a recycle timestamp to the any recyclable page, and update a reuse timestamp in the metadata to the recycle timestamp; and
add the any recyclable page to the page recycle queue.

13. The apparatus according to claim 12, wherein when reusing any page comprised in the page recycle queue, the reusing module is specifically configured to:
reuse the any page, and update the reuse timestamp in the metadata to a recycle timestamp of the any page.

14. The apparatus according to claim 12 or 13, wherein the reusing module is further configured to:
when time for accessing/modifying the index is greater than or equal to the maximum commit timestamp, and time for accessing/modifying a page in the index is greater than or equal to the recycle time, allow access/modification to the index.

15. A compute device cluster, comprising at least one compute device, wherein each compute device comprises a processor and a memory; and
the processor of the at least one compute device is configured to execute instructions stored in a memory of the at least one compute device, to enable the compute device cluster to perform the method according to any one of claims 1 to 7.

16. A computer-readable storage medium, wherein the computer-readable storage medium stores a computer program, and when the computer program is run on a compute device cluster comprising at least one compute device, the compute device cluster is enabled to perform the method according to any one of claims 1 to 7.

17. A computer program product, wherein when the computer program product is run on a compute device cluster comprising at least one compute device, the compute device cluster is enabled to perform the method according to any one of claims 1 to 7.
